# EUROPEAN PATENT APPLICATION

(11) **EP 4 607 770 A1**
(43) Date of publication of application: **27.08.2025**
(21) Application number: 25158851.3
(22) Date of filing: 19.02.2025
(51) Int. Cl.: H02K 5/20, H02K 9/19, H02K 1/20

(54) **OIL COOLING SYSTEM FOR ELECTRIC MACHINE, ELECTRIC MACHINE, ELECTRIC DRIVE ASSEMBLY SYSTEM AND VEHICLE**

(30) Priority: 21.02.2024 CN 202410197056
(71) Applicant: Valeo eAutomotive Germany GmbH, 91056 Erlangen (DE)
(72) Inventor: SUN, Yawei, 91056 Erlangen (DE); JIN, Yejin, 91056 Erlangen (DE)
(74) Representative: Valeo Powertrain Systems

(57) **Abstract**

An oil cooling system for an electric machine are disclosed. The electric machine comprising a housing and a stator accommodated in the housing. The stator has a first end part and a second end part in an axial direction of the electric machine. The oil cooling system comprises an oil inlet, for receiving external cooling oil; a first annular oil application pipe, located at the first end part and in fluid communication with the oil inlet; a second annular oil application pipe, located at the second end part and in fluid communication with the oil inlet; an axial oil application part, located between the first end part and the second end part and formed by a housing inner wall and a stator outer wall, the axial oil application part receiving cooling oil from at least one of the first annular oil application pipe and the second annular oil application pipe.

## Description

### TECHNICAL FIELD

The present disclosure relates to the field of electric machine cooling. More specifically, it relates to an oil cooling system for an electric machine, an electric machine, an electric drive assembly system and a vehicle.

### BACKGROUND

With the widespread use of electric machines in civil and commercial fields, electric machine cooling is facing stricter requirements.

Existing oil cooling systems generally comprise two straight cooling pipes arranged in parallel, or two annular cooling pipes and an axial connecting pipe arranged axially between the two annular cooling pipes to connect the two annular cooling pipes, for the purpose of cooling the electric machine stator. However, on the one hand, when straight cooling pipes arranged in parallel are used, cooling of the stator windings on the two ends of the stator is not possible, and the configuration of the parallel straight cooling pipes increases the manufacturing cost; on the other hand, when annular cooling pipes and an axial connecting pipe are used, the cooling pipe layout makes installation of the cooling system on the electric machine difficult, and can only be adapted to electric machines of a specific axial size, being unable to be effectively adapted to electric machines of different axial sizes, so has poor portability and scalability.

Thus, there is a need for an oil cooling system that is able to directly cool a stator winding while effectively cooling an electric machine stator, that can be fitted to an electric machine in a simple and convenient way, and that can be flexibly adapted to electric machines of different dimensions, as well as having a low manufacturing cost.

### SUMMARY

In response to the above problems, the present disclosure provides an oil cooling system for an electric machine, an electric machine, an electric drive assembly system and a vehicle. Using the oil cooling system for an electric machine provided in the present disclosure, it is possible to achieve effective cooling of an electric machine stator, and also possible to cool a stator wire bundle directly. In addition, the oil cooling system for example can be mounted to an electric machine in a simple and convenient manner, and can be flexibly adapted to electric machines of different dimensions.

According to one aspect of the present disclosure, an oil cooling system for an electric machine is proposed, the electric machine comprising a housing and a stator accommodated in the housing, the stator having a first end part and a second end part in an axial direction of the electric machine, the oil cooling system comprising: an oil inlet, for receiving external cooling oil; a first annular oil application pipe, located at the first end part and in fluid communication with the oil inlet; a second annular oil application pipe, located at the second end part and in fluid communication with the oil inlet; an axial oil application part, located between the first end part and the second end part and formed by a housing inner wall and a stator outer wall, the axial oil application part receiving cooling oil from at least one of the first annular oil application pipe and the second annular oil application pipe, wherein at least one of the first annular oil application pipe and the second annular oil application pipe has a first annular part and a second annular part fitted and connected thereto, such that a space for accommodating cooling oil is formed between the first annular part and the second annular part.

The oil cooling system for an electric machine according to the present disclosure may further have one or more of the following features individually or in combination.

In one embodiment, the first annular oil application pipe and the second annular oil application pipe are separate components.

In one embodiment, the first annular oil application pipe is in fluid communication with the oil inlet via a first connecting pipeline formed by the housing inner wall; and the second annular oil application pipe is in fluid communication with the oil inlet via a second connecting pipeline formed by the housing inner wall.

In one embodiment, the first annular part comprises: a first axially extending wall and a radially extending wall disposed at a first end of the first axially extending wall and extending radially outward; and the second annular part comprises: a second axially extending wall, which is arranged on a radial outer side of the first axially extending wall, the second axially extending wall being connected to the radially extending wall by a first joining part arranged at a first end of the second axially extending wall, and connected to the first axially extending wall by a second joining part arranged at a second end of the second axially extending wall and extending radially inward.

In one embodiment, at least one of the first annular oil application pipe and the second annular oil application pipe comprises at least one oil pipe support, the oil pipe support comprising a support part, which extends transversely to the radially extending wall from at least one of the first annular oil application pipe and the second annular oil application pipe, and a fixing part that is arranged at a free end of the support part, the fixing part being connected to the housing by a fastener.

In one embodiment, the oil pipe support is integrally formed with the first annular part.

In one embodiment, the first axially extending wall of the first annular part is provided with a predetermined number of oil application holes, to apply cooling oil to a stator wire bundle at the first end part and/or the second end part.

In one embodiment, the second axially extending wall is provided with an opening for spraying oil towards the axial oil application part.

In one embodiment, the second axially extending wall has at least one axially extending section, and the opening is provided on the axially extending section.

In one embodiment, the first annular oil application pipe and the second annular oil application pipe are made of plastic.

In one embodiment, at least one cooling channel is further formed between the housing inner wall and the stator outer wall, the at least one cooling channel being in fluid communication with the axial oil application part.

In one embodiment, the axial oil application part is disposed at an upper part of the at least one cooling channel in the direction of gravity.

According to another aspect of the present disclosure, an electric machine is further disclosed, comprising the oil cooling system for an electric machine as mentioned above.

According to another aspect of the present disclosure, an electric drive assembly system is further disclosed, comprising the electric machine as described above.

According to another aspect of the present disclosure, a vehicle is further disclosed, comprising the electric drive assembly system as described above.

### BRIEF DESCRIPTION OF THE DRAWINGS

To explain the technical solutions of embodiments of the present disclosure more clearly, the drawings which need to be used in describing the embodiments are described in simple terms below. Obviously, the drawings in the description below are merely some embodiments of the present disclosure, and those skilled in the art could obtain other drawings based on these drawings without expending inventive effort. The drawings below are not scaled drawings according to actual dimensions but rather focus on showing the main purpose of the present disclosure.
Fig. 1 shows a schematic drawing of an electric machine 100 according to an embodiment of the present disclosure;
Fig. 2 shows an exploded view of the electric machine 100 according to an embodiment of the present disclosure, with the housing removed;
Fig. 3A shows a schematic drawing of an oil cooling system 200 arranged on the electric machine 100 in a first direction according to an embodiment of the present disclosure;
Fig. 3B shows a schematic drawing of the oil cooling system 200 arranged on the electric machine 100 in a second direction according to an embodiment of the present disclosure;
Fig. 4 shows a partial schematic drawing of the electric machine 100 according to an embodiment of the present disclosure;
Fig. 5 shows a sectional view of the electric machine 100 fitted with a first annular oil application pipe 220 and a second annular oil application pipe 230 according to an embodiment of the present disclosure;
Fig. 6 shows a schematic drawing of the first annular oil application pipe 220 and the second annular oil application pipe 230 according to an embodiment of the present disclosure, when fitted to the electric machine stator;
Fig. 7 shows a partial sectional view of the electric machine 100 fitted with the first annular oil application pipe 220 according to an embodiment of the present disclosure;
Fig. 8 shows a three-dimensional drawing of the first oil application pipe 220 according to an embodiment of the present disclosure;
Fig. 9 shows a schematic drawing of the first oil application pipe 220 yet to be assembled according to an embodiment of the present disclosure; and
Fig. 10 shows a sectional view of the first oil application pipe 220 once assembled according to an embodiment of the present disclosure.

### DETAILED DESCRIPTION

In order to clarify the technical solution and its objective and advantages of the present disclosure, the technical solutions of embodiments of the present disclosure are described clearly and completely below in conjunction with the drawings of particular embodiments of the present disclosure. In the drawings, identical reference numerals denote identical components. It must be explained that the embodiments described are some, not all, of the embodiments of the present disclosure. All other embodiments obtained by those skilled in the art based on the described embodiments of the present disclosure without the need for inventive effort shall fall within the scope of protection of the present disclosure.

Unless otherwise defined, the technical or scientific terms used herein shall have the common meanings understood by those skilled in the art. The words "first", "second", and the like used in the description and claims of the patent application disclosed herein do not indicate any order, quantity or importance, being merely used to distinguish different component parts. Likewise, words such as "a" or "one" do not necessarily represent a quantity limit. Words such as "comprising", "including" or "having" mean that the element or object preceding the word covers the elements or objects listed after the word and equivalents thereof, without excluding other elements or objects. Words such as "connection" or "communication", rather than being limited to the physical or mechanical connection or communication shown in a drawing, may include connection or communication equivalent thereto, irrespective of whether it is direct or indirect. The terms "upper", "lower", "left", "right" and the like are only used to indicate a relative positional relationship, and when the absolute position of a described object changes, the relative positional relationship may also change accordingly.

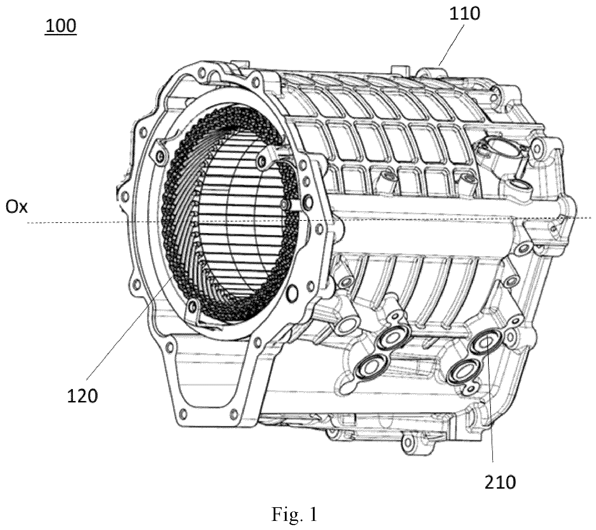

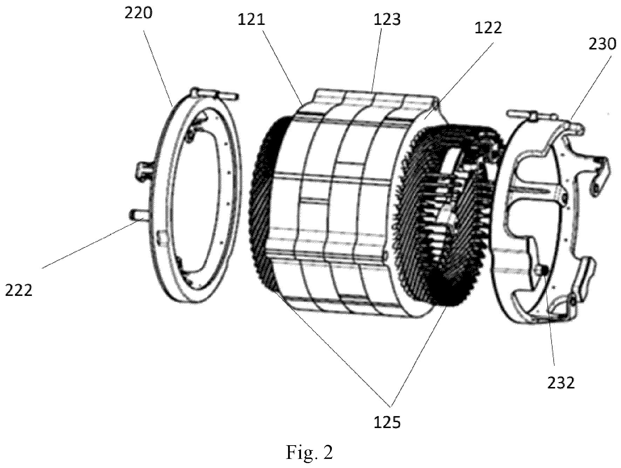

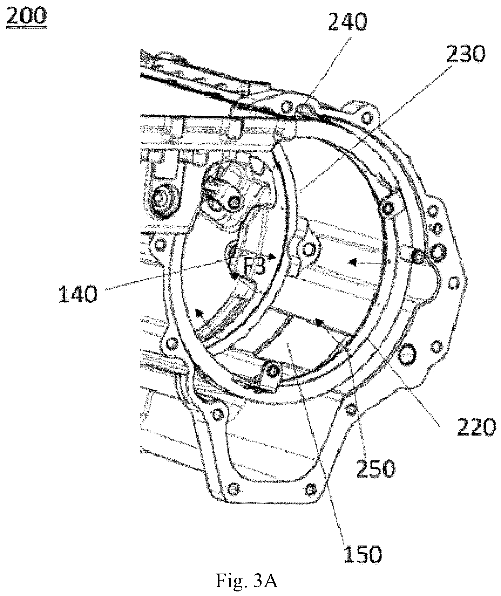

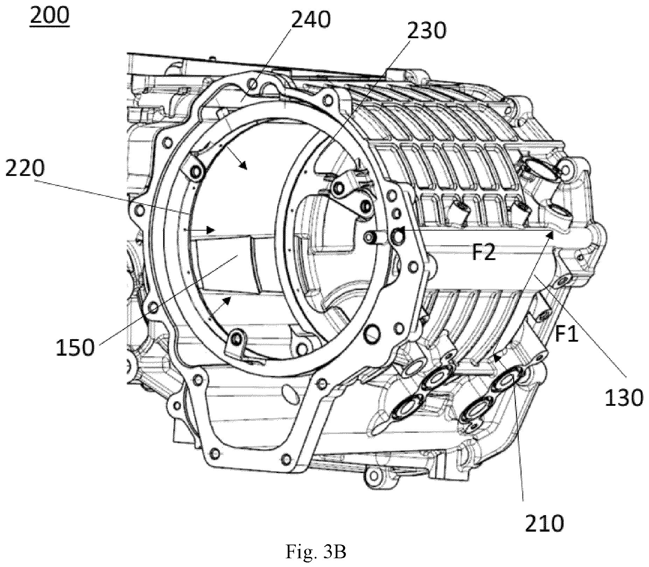

The present disclosure proposes an oil cooling system for an electric machine. Fig. 1 shows a schematic drawing of an electric machine 100 according to an embodiment of the present disclosure; Fig. 2 shows an exploded view of the electric machine 100 shown in Fig. 1, with the housing removed; Figs. 3A and 3B respectively show a schematic drawing of an oil cooling system 200 arranged on the electric machine 100, wherein an electric machine stator is not shown.

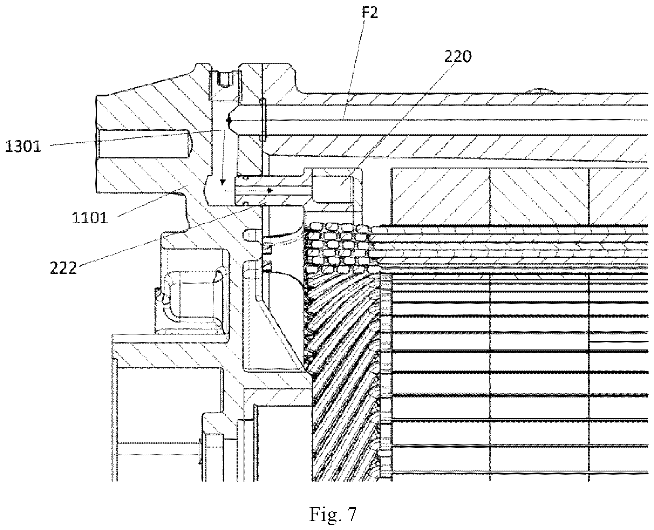

Referring to Figs. 1 to 3B, the electric machine 100 for example comprises a housing 110, and a stator 120 accommodated in the housing. The stator 120 has a first end part 121 and a second end part 122 in the direction of an electric machine axis Ox (also called the axial direction hereinbelow). For the sake of clarity, Fig. 1 does not show an end cap of the electric machine 100 arranged at at least one end part of the stator 120 (Fig. 7 shows this end cap 1101 as an example), and which may be part of the housing 110.

The direction of the electric machine axis Ox is the direction of a rotation axis of the electric machine.

The terms "first end part" and "second end part" are intended to distinguish between different end parts disposed at two ends of the stator along the rotation axis of the electric machine, rather than define these end parts.

It should be understood that the interior of the electric machine may for example further comprise an electric machine rotor, disposed inside the stator and rotating about the axis of the electric machine.

For example, the electric machine stator has stator wire bundles 125 at the first end part and the second end part. It should be understood that the stator wire bundles 125 are formed of stator windings wound on the electric machine stator.

Furthermore, referring to Figs. 1 to 3B, the oil cooling system 200 for example comprises: an oil inlet 210, a first annular oil application pipe 220, a second annular oil application pipe 230 and an axial oil application part 240.

The oil inlet 210 is configured to receive external cooling oil. For example, the oil inlet may receive cooling oil from a cooling oil pump via an oil entry pipeline.

The first annular oil application pipe 220 is located at the first end part 121, and in fluid communication with the oil inlet 210. For example, the first annular oil application pipe may be connected to the oil inlet via a connecting pipeline disposed in a housing inner wall.

The second annular oil application pipe 230 is located at the second end part 122, and in fluid communication with the oil inlet 210. For example, the second annular oil application pipe may be connected to the oil inlet via a connecting pipeline disposed in a housing inner wall.

It should be understood that "oil application pipe" means a pipeline used to apply cooling oil, and the "annular oil application pipe" means that the pipeline has a substantially annular shape. For example, the annular oil application pipe may be an annular pipeline. It should be understood that embodiments of the present disclosure are not restricted in terms of the specific annular form of the annular oil application pipe.

It should be understood that the first and second annular oil application pipes may realize a process of applying oil to the electric machine stator via oil application holes disposed on the oil application pipes for example (the spraying of cooling oil from oil application holes towards the axial oil application part is shown schematically by the arrows in Figs. 3A and 3B), thereby realizing direct cooling of the first end part and second end part of the electric machine stator, in particular the wire bundles disposed on the first end part and the second end part.

It should be understood that the terms "first annular oil application pipe" and "second annular oil application pipe" are merely intended to distinguish between the two annular oil application pipes disposed at the first end part and the second end part respectively, rather than define them.

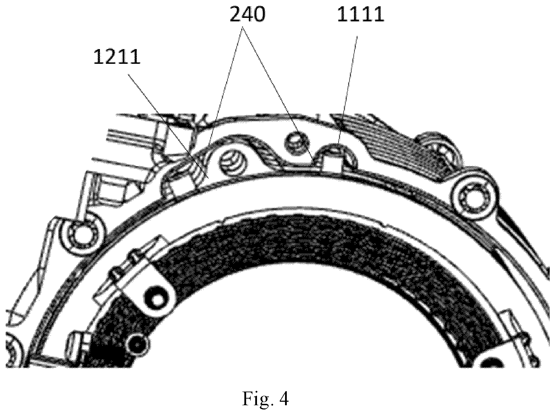

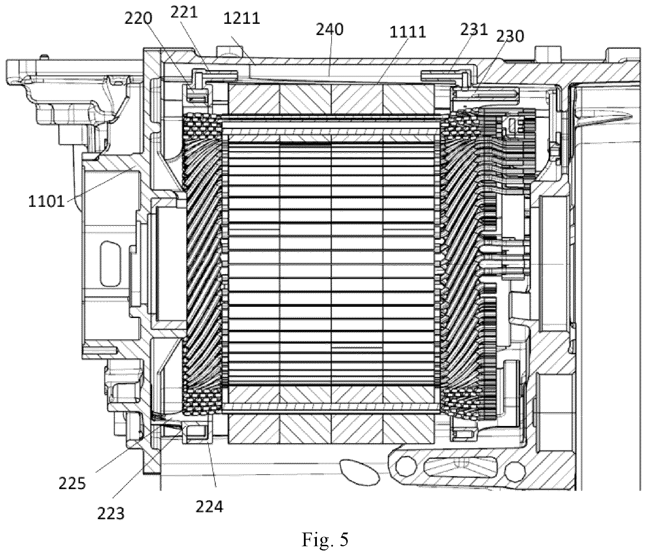

Fig. 4 shows a partial schematic drawing of the electric machine 100 according to an embodiment of the present disclosure, wherein the axial oil application part 240 is shown schematically. Fig. 5 shows a sectional view of the electric machine 100 fitted with a first annular oil application pipe and a second annular oil application pipe according to an embodiment of the present disclosure. The axial oil application part 240 is located between the first end part 121 and the second end part 122 and formed by a housing inner wall 1111 and a stator outer wall 1211, the axial oil application part 240 receiving cooling oil from at least one of the first annular oil application pipe 220 and the second annular oil application pipe 230. Further, at least one of the first annular oil application pipe 220 and the second annular oil application pipe 230 has a first annular part 223 and a second annular part 224 fitted and connected thereto, such that a space for accommodating cooling oil is formed between the first annular part 223 and the second annular part 224.

The axial oil application part is used to apply cooling oil to an axial segment of the electric machine, for example, to an axial segment 123 (i.e. an electric machine back part) of the stator located between the first end part and second end part (this axial segment is shown schematically in Fig. 2).

The axial oil application part may for example receive cooling from only one of the first annular oil application pipe and second annular oil application pipe, or may receive cooling oil from both the first annular oil application pipe and the second annular oil application pipe at the same time.

Referring to Fig. 5, the axial oil application part may for example be an oil application section 240 formed by the housing inner wall 1211 and stator outer wall 1111 together; the first annular oil application pipe 220 and second annular oil application pipe 230 for example each have an axially extending section 221, 231 that extends to the axial oil application part, and are each provided with an opening on the axially extending section 221, 231; and the cooling oil flows into the axial oil application section 240 via the opening on the axially extending section 221, 231.

The process of the axial oil application part cooling the electric machine stator is now described in more detail. For example, referring back to Figs. 3A and 3B, after the cooling oil enters the axial oil application part via the first annular oil application pipe and/or the second annular oil application pipe (once the electric machine is mounted in place, the axial oil application part is for example disposed at the highest point of the electric machine or in a region close to the highest point), the cooling oil in the axial oil application part may for example flow from the axial oil application part to the bottom of the electric machine housing under its own weight directly via a gap formed by a circumferential inner wall of the housing and a circumferential outer wall of the electric machine stator, and in the process of flowing, cools the outer wall of the electric machine stator, i.e. cools the electric machine stator (in particular, the axial segment of the electric machine stator).

Alternatively, in some embodiments, a cooling channel may also be formed between the housing inner wall and the stator outer wall; the cooling channel is in fluid communication with the axial oil application part, and cooling oil cools the electric machine stator via the cooling channel.

It should be understood that depending on actual needs, the oil cooling system may also comprise other components. For example, the oil cooling system may comprise a cooling oil pump, to supply cooling oil and receive used cooling oil. Moreover, the oil cooling system for example may further comprise a heat exchanger, disposed between the cooling oil pump and the oil inlet to cool the cooling oil entering the oil inlet.

Based on the above, in the present disclosure, by configuring the oil cooling system to comprise the first annular oil application pipe disposed at the first end part of the stator and the second annular oil application pipe disposed at the second end part of the stator, direct cooling of the stator wire bundles via the annular oil application pipes disposed at the two end parts is enabled; furthermore, by providing the axial oil application part for receiving cooling oil from at least one of the first annular oil application pipe and the second annular oil application pipe, effective cooling of the electric machine stator and in particular the axial segment of the electric machine stator via the annular oil application parts is enabled. Thus, in the process of stator cooling, it is possible to effectively cool both the axial segment of the stator and the wire bundles at the end parts; compared with a cooling system of straight pipes laid abreast, direct cooling of the stator wire bundles can also be achieved, thus improving the wire bundle cooling result, and helping to prevent overheating of the wire bundles which would affect the performance of the electric machine stator; moreover, there is no need for additional straight pipes laid abreast, so costs are effectively reduced.

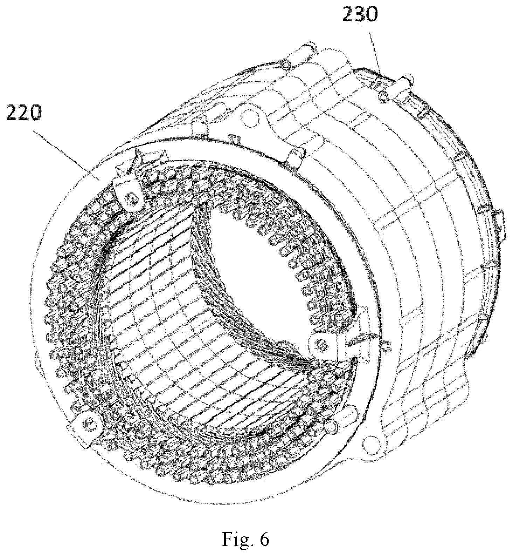

Fig. 6 shows a schematic drawing of the first annular oil application pipe and the second annular oil application pipe according to an embodiment of the present disclosure, when fitted to the electric machine stator.

Referring to Figs. 2, 3 and 6, in some embodiments, the first annular oil application pipe 220 and the second annular oil application pipe 230 are separate components.

It should be understood that the statement that the first annular oil application pipe and the second annular oil application pipe are separate means that no axial connecting pipe for directly connecting the first annular oil application pipe and the second annular oil application pipe is provided therebetween.

Based on the above, in the present disclosure, as a result of configuring the first annular oil application pipe and second annular oil application pipe to be separate, compared with an existing oil cooling system comprising two annular cooling pipes and an axial connecting pipe arranged axially between the two annular cooling pipes to connect the two annular cooling pipes, the structural layout of two separate annular oil application pipes used in the present disclosure enables the oil cooling system in the present disclosure to be mounted to the electric machine in a simple and convenient way; moreover, without any axial connecting pipe provided for connection purposes, when the axial size of the electric machine changes, the first annular oil application pipe and second annular oil application pipe in the oil cooling system of the present disclosure can still be flexibly mounted to the two end parts of the electric machine, thus making it easier for the oil cooling system to be adapted to electric machines with different axial length dimensions.

With continued reference to Figs. 3A and 3B, Fig. 3A shows a schematic drawing of the housing and first and second annular oil application pipes in a first direction according to an embodiment of the present disclosure, and Fig. 3B shows a schematic drawing of the housing and first and second annular oil application pipes in a second direction according to an embodiment of the present disclosure.

Referring to Fig. 3B, in some embodiments, the first annular oil application pipe 220 is in fluid communication with the oil inlet 210 via a first connecting pipeline 130 formed by the housing inner wall; and referring to Fig. 3A, the second annular oil application pipe 230 is in fluid communication with the oil inlet 210 via a second connecting pipeline 140 formed by the housing inner wall.

It should be understood that the terms "first connecting pipeline 130" and "second connecting pipeline 140" are merely used to distinguish between pipelines formed by the housing inner wall and used to connect different oil application pipes, rather than define these pipelines.

The connecting pipelines are now described in further detail with reference to Figs. 3A and 3B. Firstly, cooling oil flowing in from the oil inlet 210 flows into the housing inner wall via a path F1 for example (the path F1 is for example an input pipeline formed by the housing inner wall); next, after flowing along the path F1, the cooling oil is split into two branches: one portion of cooling oil will enter a path F2 via the first connecting pipeline 130 (which in this case is for example the transverse connecting pipeline shown schematically in Fig. 3B) disposed at the housing inner wall, flow into the first annular oil application pipe 220 via the first connecting pipeline 130, and flow in the first annular oil application pipe 220, to provide cooling oil to the first end part of the electric machine via the corresponding oil application holes 250; another portion of cooling oil will enter a path F3 via the second connecting pipeline 140 disposed in the housing inner wall, then enter the second annular oil application pipe 230, and flow in the second annular oil application pipe 230, to provide cooling oil to the second end part of the electric machine via the corresponding oil application holes 250.

It should be understood that the aforementioned first connecting pipeline 130 may also comprise an input pipeline formed by an inner wall of an end cap of the electric machine, i.e., as an example, with reference to Fig. 7, the path by which cooling oil enters the path F2 via the first connecting pipeline 130 and flows into the first annular oil application pipe 220 may be through an input pipeline 1301 formed by an inner wall of the end cap 1101 of the electric machine and into the first annular oil application pipe 220 via a first input port 222 arranged on the first annular oil application pipe 220. In another embodiment, the first input port 222 also may not be connected to the input pipeline formed by the inner wall of the end cap of the electric machine, thereby communicating directly with the input pipeline 130 corresponding to path F2.

It should be understood that the second annular oil application pipe 230 may also comprise a second input port 232 connected to a second connecting pipeline 140 corresponding to the path F3 (see Fig. 2).

It should be understood that the present disclosure is not restricted in terms of the specific shapes and dimensions of the first connecting pipeline and second connecting pipeline formed inside the housing.

Based on the above, in the present disclosure, as a result of configuring the first annular oil application pipe to be in fluid communication with the oil inlet via the first connecting pipeline formed by the housing inner wall, and configuring the second annular oil application pipe to be in fluid communication with the oil inlet via the second connecting pipeline formed by the housing inner wall, the connecting pipelines of the housing inner wall can be effectively used for the additional purpose of separately connecting the first annular oil application pipe and second annular oil application pipe to the oil inlet, so that there is no need to additionally provide an axial connecting pipe for connecting the first and second annular oil application pipes; thus, based on the effective connection of both the first and second annular oil application pipes to the oil inlet to receive cooling oil, the oil cooling system of the present disclosure is further enabled to be mounted to the electric machine in a simple and convenient way; and based on effective adaptation to electric machines of different axial sizes, the manufacturing cost of the oil cooling system can be further reduced by using the connecting pipelines of the housing inner wall for the additional purpose.

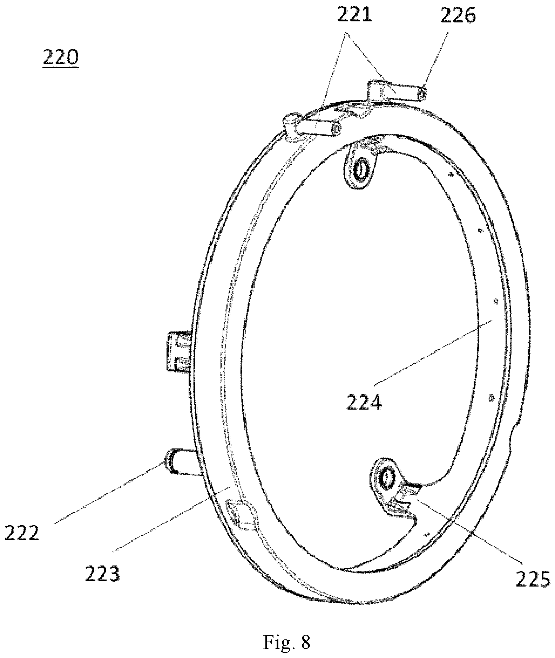

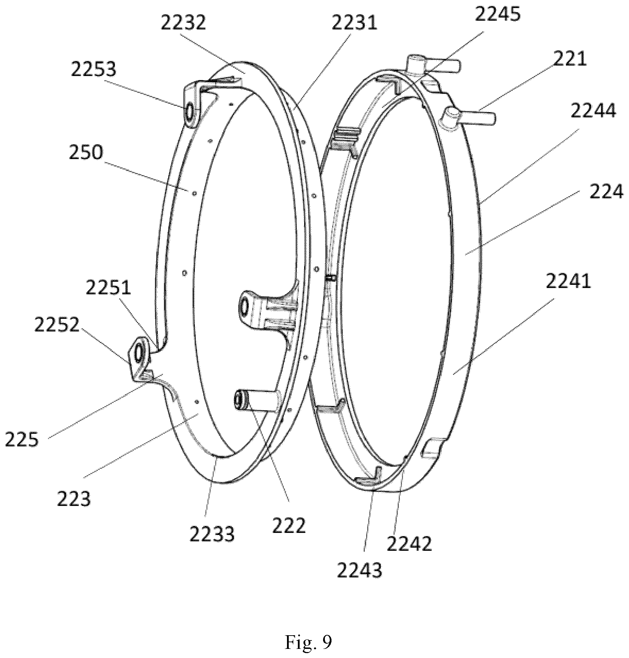

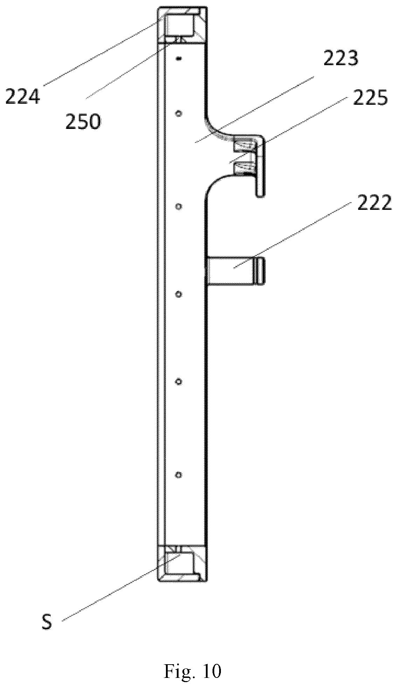

Fig. 8 shows a three-dimensional drawing of the first oil application pipe according to an embodiment of the present disclosure; Fig. 9 shows a schematic drawing of the first oil application pipe yet to be assembled according to an embodiment of the present disclosure; and Fig. 10 shows a sectional view of the first oil application pipe once assembled according to an embodiment of the present disclosure.

It should be understood that the first oil application pipe and the second oil application pipe have a similar structure and components, and only the first oil application pipe will be described in detail herein.

With reference to Fig. 5 and Figs. 8 to 10, as an example, the first annular oil application pipe 220 has a first annular part 223 and a second annular part 224 fitted and connected thereto, such that a space S for accommodating cooling oil is formed between the first annular part 223 and the second annular part 224.

More specifically, the first annular part 223 comprises a first axially extending wall 2231 and a radially extending wall 2232 disposed at a first end 2233 of the first axially extending wall and extending radially outward; and the second annular part 224 comprises a second axially extending wall 2241, which is arranged on a radial outer side of the first axially extending wall 2231, the second axially extending wall 2241 being connected to the radially extending wall 2232 by a first joining part 2242 arranged at a first end 2243 of the second axially extending wall, and connected to the first axially extending wall 2231 by a second joining part 2245 arranged at a second end 2244 of the second axially extending wall and extending radially inward.

In one embodiment, the first jointing part 2242 is connected to the radially extending wall 2232 by welding, and the second joining part 2245 is connected to the first axially extending wall 2231 by welding.

In one embodiment, the first annular oil application pipe 220 further comprises a first input port 222 to receive cooling oil from the oil inlet.

It should be understood that the terms "radially inward" and "radially outward" mentioned above refer to a direction toward an electric machine axis Ox and a direction away from the electric machine axis Ox, respectively.

Based on the above, in the present disclosure, configuring an annular oil application pipe to comprise two interconnected annular parts can make production processing and assembly easier compared to existing single integral annular oil application pipe designs.

In one embodiment, the first annular oil application pipe 220 comprises at least one oil pipe support 225, the oil pipe support 225 comprising a support part 2251, which extends transversely to the radially extending wall 2232 from the first annular oil application pipe 220, and a fixing part 2252 that is arranged at a free end of the support part 2251, the fixing part 2252 being connected to the housing 110 (for example, the end cap 1101 shown in Fig. 5) by a fastener. The fixing part 2252 is provided with a through hole 2253 for receiving a fastener, which may be a bolt.

In one embodiment, the oil pipe support 225 is integrally formed with the first annular part 223.

In one embodiment, the first annular oil application pipe 220 and the second annular oil application pipe 230 are made of plastic. The use of plastic materials in the present disclosure is lighter and less costly compared to existing solutions using straight metal pipes, and in addition, the use of plastic materials requires less electrical safety clearance.

In some embodiments, the first annular oil application pipe and the second annular oil application pipe are both provided with an oil application hole. Specifically, the first axially extending wall 2231 of the first annular part 223 is provided with a predetermined number of oil application holes 250, to apply cooling oil to a stator wire bundle at the first end part and/or the second end part. In some embodiments, this predetermined number is three or more to achieve a better cooling effect.

The oil application holes are parts that take the form of holes in the first and second oil application pipes and are used to apply cooling oil to the electric machine. It should be understood that the oil application holes may for example be round holes, or may have another shape. Embodiments of the present disclosure are not restricted in terms of the specific shape and size of the oil application holes.

The oil application holes may for example be uniformly distributed on the first annular oil application pipe and the second annular oil application pipe, or the positions and manner of arrangement of the oil application holes on the first annular oil application pipe and the second annular oil application pipe may be configured flexibly according to actual circumstances (e.g. based on heating at different sections of the two end parts of the electric machine stator). It should be understood that embodiments of the present disclosure are not restricted in terms of the positions and manner of arrangement of the oil application holes on the first and second annular oil application pipes.

In some embodiments, the oil application holes 250 apply cooling oil to stator wire bundles at the first end part and the second end part.

For example, as stated above, the electric machine stator has stator wire bundles at the first end part and the second end part. It should be understood that the stator wire bundles are formed of stator windings wound on the electric machine stator.

For example, the oil application holes may be configured to be located at the side of the first and second annular oil application pipes that faces towards the electric machine stator, and the cooling oil in the first and second annular oil application pipes may be configured to be sprayed radially towards the electric machine stator through the oil application holes, thereby directly cooling the first end part and second end part of the electric machine stator, in particular the stator wire bundles at the first end part and second end part of the electric machine stator.

Based on the above, as a result of configuring the oil application holes to apply cooling oil to the stator wire bundles at the first end part and the second end part, direct cooling of the stator wire bundles at the first end part and second end part of the electric machine stator via the oil application holes on the first and second annular oil application pipes is enabled. Compared with an existing oil cooling system that can only cool an axial segment of the stator and is unable to directly cool stator wire bundles, the oil cooling system of the present disclosure can cool both the axial segment of the stator and the stator wire bundles, thereby improving the cooling result, and in particular reducing the impact which excessively high wire bundle temperature has on electric machine performance.

In some embodiments, at least one of the first annular oil application pipe 220 and the second annular oil application pipe 230 has an opening for spraying oil towards the axial oil application part 240. Specifically, the second axially extending wall 2241 is provided with an opening for spraying oil towards the axial oil application part 240.

The opening for spraying oil towards the axial oil application part is an opening for causing cooling oil to flow into the axial oil application part from at least one of the first annular oil application pipe and the second annular oil application pipe. Embodiments of the present disclosure are not restricted in terms of the specific position and design of the opening.

For example, the opening may be provided on only one of the first annular oil application pipe and the second annular oil application pipe, so that cooling oil in only one of the first annular oil application pipe and the second annular oil application pipe flows into the axial oil application part, or openings for spraying oil towards the axial oil application part may be provided on both the first annular oil application pipe and the second annular oil application pipe.

For example, an oil application hole disposed at a position leading to the axial oil application part may be used directly as the abovementioned opening for spraying oil towards the axial oil application part; or at least one axially extending section may be provided on at least one of the first annular oil application pipe and the second annular oil application pipe, and the opening leading to the axial oil application part may be provided on the axially extending section.

Based on the above, in the present disclosure, as a result of configuring at least one of the first annular oil application pipe and the second annular oil application pipe to have an opening for spraying oil towards the axial oil application part, cooling oil in the first annular oil application pipe and/or the second annular oil application pipe can pass into the axial oil application part via the opening, thus facilitating fluid communication between the axial oil application part and the first and/or second annular oil application pipe, so as to effectively supply cooling oil to the axial oil application part, and thereby cool the electric machine stator with the cooling oil at the axial oil application part.

In some embodiments, at least one of the first annular oil application pipe and the second annular oil application pipe has at least one axially extending section, and the opening is provided on the axially extending section. As shown in Figs. 8 and 9, in one embodiment, the second axially extending wall 2241 has at least one axially extending section 221, and the opening 226 is provided on the axially extending section.

The axially extending section is a section of the first annular oil application pipe and/or the second annular oil application pipe that extends towards the axial oil application part, for example in the axial direction of the electric machine.

The opening may for example be disposed at an end part of the axially extending section, or may be disposed at another position on the axially extending section according to actual needs.

Referring back to Figs. 3A and 3B, in some embodiments, at least one cooling channel 150 is also formed between the housing inner wall 1211 and the stator outer wall 1111, the at least one cooling channel 150 being in fluid communication with the axial oil application part 240.

The cooling channel is a pathway for cooling oil flow. For example, the cooling channel may be a groove formed on the housing inner wall in the circumferential direction.

The statement that the cooling channel is in fluid communication with the axial oil application part means that cooling oil in the axial oil application part is able to flow into the cooling channel.

It should be understood that depending on actual needs, the cooling channel may for example be multiple cooling channels arranged uniformly between the housing inner wall and the stator outer wall; or may be one or more cooling channels disposed between one part of the housing inner wall and a corresponding part of the stator outer wall. Specifically, for example when the electric machine housing has a draft angle, a gap between the electric machine housing inner wall and the stator outer wall for example decreases from the first end part to the second end part, i.e. the gap between the electric machine housing and the stator outer wall is largest at the first end part of the electric machine stator, the gap between the electric machine housing and the stator outer wall is smallest at the second end part of the electric machine stator, and the cooling channel is for example a groove formed on the housing inner wall; in this case, for example, the cooling channel may be formed only at a part of the housing inner wall that is close to the second end part of the electric machine stator, so that cooling oil can flow effectively in a region where the gap between the electric machine stator outer wall and the electric machine housing inner wall is smaller (where cooling oil might not be able to flow effectively) due to the provision of the cooling channel, thereby cooling this region effectively.

Based on the above, in the present disclosure, as a result of the configuration whereby at least one cooling channel is further formed between the housing inner wall and the stator outer wall, with the at least one cooling channel being in fluid communication with the axial oil application part, cooling oil in the axial oil application part can flow between the housing inner wall and the stator outer wall under the guidance of the cooling channel, such that guidance of the cooling oil is facilitated effectively, thereby enhancing the cooling result and efficiency, in particular enhancing the cooling result in a region where the housing inner wall and stator outer wall are joined or the gap therebetween is smaller (in such a region, cooling oil might not be able to flow effectively if no cooling channel were provided, giving a poor cooling result).

Referring again to Figs. 3A and 3B, in some embodiments, the at least one cooling channel is grooves 150 formed on the housing inner wall in the circumferential direction.

The circumferential direction is the direction of the housing periphery. For example, when the housing has a substantially cylindrical shape, the circumferential direction is for example the peripheral direction of the circumference of the cylinder.

The groove may for example be a groove with a rectangular shape (as shown in Figs. 3A and 3B), so as to accommodate cooling oil therein, and thereby guide cooling oil to flow along the surface of the axial segment of the electric machine stator; or may have another shape. It should be understood that embodiments of the present disclosure are not restricted in terms of the specific shape and dimensions of the groove.

For example, the groove on the housing may extend along the entire circumferential direction, or may extend over only part of the circumferential direction according to actual needs.

Based on the above, in the present disclosure, as a result of configuring the at least one cooling channel to be a groove formed on the housing inner wall in the circumferential direction, the inner wall of the housing can be used for the additional purpose of simply and conveniently forming a cooling channel connected to the axial oil application part, helping to reduce costs.

In some embodiments, the axial oil application part 240 is disposed at an upper part of the at least one cooling channel in the direction of gravity.

The direction of gravity is the direction of the cooling oil's own weight, and the statement that the axial oil application part is disposed at an upper part of the at least one cooling channel in the direction of gravity means that the axial oil application part is disposed upstream of the cooling channel in the direction of the cooling oil's own weight, such that the cooling oil will flow towards the cooling channel from the axial oil application part under the action of its own weight, so no additional guidance is needed. As shown in Figs. 3A and 3B, once the electric machine is mounted in place, the axial oil application part in the oil cooling system of the electric machine is for example disposed at the highest point of the electric machine or in a region close to the highest point.

Based on the above, as a result of having the axial oil application part disposed at an upper part of the at least one cooling channel in the direction of gravity, after cooling oil has passed into the axial oil application part, it will be able to effectively flow into the cooling channel via the axial oil application part under the action of its own weight; thus, the flow direction of the cooling oil is guided effectively, preventing cooling oil from flowing or overflowing in an undesired direction (e.g. flowing out of the first end part and second end part of the electric machine stator in the axial direction).

In some embodiments, the oil cooling system further comprises an oil collection groove for collecting cooling oil, the oil collection groove having an oil outlet.

The oil collection groove is a groove-like part for collecting cooling oil; the oil outlet is an opening for conveying cooling oil out of the oil collection groove. It should be understood that embodiments of the present disclosure are not restricted in terms of the specific shape and structure of the oil collection groove and oil outlet.

For example, the oil collection groove may be disposed at the bottom of the electric machine stator in the direction of gravity, such that having entered the cooling channel from the axial oil application part in the direction of gravity and been guided by the cooling channel, cooling oil can be collected by the oil collection groove to the maximum extent when it flows out of an extremity of the cooling channel and enters the bottom of the electric machine stator.

For example, the oil outlet may be connected to the cooling oil pump, such that the cooling oil collected by the oil collection groove flows back into the cooling oil pump.

Based on the above, as a result of configuring the oil cooling system to further comprise the oil collection groove and oil outlet, cooling oil can be recovered via the oil collection groove after the cooling oil has cooled the stator, and further outputted via the oil outlet; in this way, cooling oil can be outputted effectively, making it possible to recycle the cooling oil.

According to another aspect of the present disclosure, an electric machine is proposed, comprising the oil cooling system for an electric machine as mentioned above.

According to another aspect of the present disclosure, an electric drive assembly system is proposed, which for example comprises the electric machine as described above.

The electric drive assembly system is a system used to realize drive control of a drive electric machine (e.g. a three-phase AC electric machine) of the vehicle. The electric drive assembly system for example may further comprise other electrical components or apparatuses, depending on actual needs. The embodiments of the present disclosure are not restricted by the specific composition of the electric drive assembly system or the types of components included therein.

In some embodiments, the oil cooling system for an electric machine in the electric drive assembly system may for example have the structure described above, and be able to perform the functions described above.

According to another aspect of the present disclosure, a vehicle is further proposed. The vehicle for example comprises the electric drive assembly system described above.

The vehicle is for example a pure electric vehicle (BEV, Battery Electric Vehicle), a hybrid vehicle (HEV, Hybrid Electric Vehicle), a plug-in hybrid vehicle (PHEV, Plug-in Hybrid Electric Vehicle), a range extended electric vehicle (range extended electric valve), a fuel cell vehicle (FCEV, Fuel Cell Electric Vehicle), etc.

In some embodiments, the electric drive assembly system of the vehicle may for example comprise an oil cooling system for an electric machine, and for example may have the structure described above, and be able to perform the functions described above.

The present disclosure uses specific words to describe embodiments of the present disclosure. For example, "first/second embodiment", "an embodiment", and/or "some embodiments" mean a certain feature, structure or characteristic related to at least one embodiment of the present disclosure. Therefore, it should be stressed and noted that "an embodiment", "one embodiment" or "an alternative embodiment" mentioned two or more times in different places herein does not necessarily refer to the same embodiment. In addition, certain features, structures or characteristics in one or more embodiments of the present disclosure may be combined appropriately.

Unless otherwise defined, all of the terms (including technical and scientific terms) used herein have the same meanings as those commonly understood by those skilled in the art. It should also be understood that terms such as those generally defined in a dictionary should be interpreted as having the same meanings as in the context of the related art, rather than being interpreted in an idealized or extremely formalised sense, unless expressly so defined herein.

The above is a description of the present disclosure, and should not be regarded as limiting it. Although some exemplary embodiments of the present disclosure have been described, those skilled in the art will readily understand that many modifications could be made to the exemplary embodiments without departing from the original teaching and advantages of the present disclosure. Therefore, all such modifications are intended to be comprised in the scope of the present disclosure as defined by the claims. It should be understood that the above is a description of the present disclosure, and should not be deemed to be limited to the specific embodiments disclosed; in addition, modifications made to the disclosed embodiments and other embodiments are intended to be included within the scope of the attached claims. The present disclosure is defined by the claims and their equivalents.

## Claims

1. An oil cooling system (200) for electric machine, the electric machine comprising a housing (110) and a stator (120) accommodated in the housing (110), the stator (120) having a first end part (121) and a second end part (122) in an axial direction of the electric machine, the oil cooling system (200) comprising:
an oil inlet (210), for receiving external cooling oil;
a first annular oil application pipe (220), located at the first end part (121) and in fluid communication with the oil inlet (210);
a second annular oil application pipe (230), located at the second end part (122) and in fluid communication with the oil inlet (210);
an axial oil application part (240), located between the first end part (121) and the second end part (122) and formed by a housing inner wall (1211) and a stator outer wall (1111), the axial oil application part (240) receiving cooling oil from at least one of the first annular oil application pipe (220) and the second annular oil application pipe (230),
wherein, at least one of the first annular oil application pipe (220) and the second annular oil application pipe (230) has a first annular part (223) and a second annular part (224) fitted and connected thereto, such that a space for accommodating cooling oil is formed between the first annular part (223) and the second annular part (224).

2. The oil cooling system (200) according to Claim 1, wherein the first annular oil application pipe (220) and the second annular oil application pipe (230) are separate components.

3. The oil cooling system (200) according to Claim 1 or 2, wherein the first annular oil application pipe (220) is in fluid communication with the oil inlet (210) via a first connecting pipeline (130) formed by the housing inner wall (1211); and the second annular oil application pipe (230) is in fluid communication with the oil inlet (210) via a second connecting pipeline (140) formed by the housing inner wall (1211).

4. The oil cooling system (200) according to Claim 1 or 2, wherein
the first annular part (223) comprises:
a first axially extending wall (2231) and a radially extending wall (2232) disposed at a first end (2233) of the first axially extending wall (2231) and extending radially outward;
and the second annular part (224) comprises:
a second axially extending wall (2241), which is arranged on a radial outer side of the first axially extending wall (2231), the second axially extending wall (2241) being connected to the radially extending wall (2232) by a first joining part (2242) arranged at a first end (2243) of the second axially extending wall, and connected to the first axially extending wall (2231) by a second joining part (2245) arranged at a second end (2244) of the second axially extending wall and extending radially inward.

5. The oil cooling system (200) according to Claim 4, wherein at least one of the first annular oil application pipe (220) and the second annular oil application pipe (230) comprises at least one oil pipe support (225), the oil pipe support (225) comprising a support part (2251), which extends transversely to the radially extending wall (2232) from at least one of the first annular oil application pipe (220) and the second annular oil application pipe (230), and a fixing part (2252) that is arranged at a free end of the support part (2251), the fixing part (2252) being connected to the housing (110) by a fastener.

6. The oil cooling system (200) according to Claim 5, wherein the oil pipe support (225) is integrally formed with the first annular part (223).

7. The oil cooling system (200) according to Claim 4, wherein the first axially extending wall (2231) of the first annular part (223) is provided with a predetermined number of oil application holes (250), to apply cooling oil to a stator wire bundle at the first end part (121) and/or the second end part (122).

8. The oil cooling system (200) according to Claim 4, wherein the second axially extending wall (2241) is provided with an opening for spraying oil towards the axial oil application part (240).

9. The oil cooling system according to Claim 8, wherein the second axially extending wall (2241) has at least one axially extending section (221), and the opening is provided on the axially extending section (221).

10. The oil cooling system (200) according to Claim 1, wherein the first annular oil application pipe (220) and the second annular oil application pipe (230) are made of plastic.

11. The oil cooling system (200) according to Claim 1 or 8, wherein at least one cooling channel (150) is further formed between the housing inner wall (1211) and the stator outer wall (1111), the at least one cooling channel (150) being in fluid communication with the axial oil application part (240).

12. The oil cooling system (200) according to Claim 11, wherein the axial oil application part (240) is disposed at an upper part of the at least one cooling channel (150) in the direction of gravity.

13. An electric machine (100), wherein the electric machine (100) comprises the oil cooling system (200) for an electric machine according to any one of Claims 1 to 12.

14. An electric drive assembly system, wherein the electric drive assembly system comprises the electric machine (100) according to Claim 13.

15. A vehicle, the vehicle comprising the electric drive assembly system according to Claim 14.
